# EUROPEAN PATENT APPLICATION

(11) **EP 1 833 109 A1**
(43) Date of publication of application: **12.09.2007**
(21) Application number: 06730366.9
(22) Date of filing: 29.03.2006
(51) Int. Cl.: H01M 4/38, H01M 4/02, H01M 4/04, H01M 10/40

(54) **RECHARGEABLE BATTERY WITH NONAQUEOUS ELECTROLYTE AND PROCESS FOR PRODUCING NEGATIVE ELECTRODE**

(30) Priority: 03.06.2005 JP 2005163891
(71) Applicant: MATSUSHITA ELECTRIC INDUSTRIAL CO., LTD., Osaka 571-8501 (JP)
(72) Inventor: UEDA, Tomohiro, 19F Matsushita IMP Blg. 3-7 Shiromi 1-chome, Chuo-ku Osaka-shi, Osaka 540-6319 (JP); SANO, Youko, 19F Matsushita IMP Blg. 3-7 Shiromi 1-chome, Chuo-ku Osaka-shi, Osaka 540-6319 (JP); NANNO, Tetsuo, 19F Matsushita IMP Blg. 3-7 Shiromi 1-chome, Chuo-ku Osaka-shi, Osaka 540-6319 (JP); INATOMI, Yuu, 19F Matsushita IMP Blg. 3-7 Shiromi 1-chome, Chuo-ku Osaka-shi, Osaka 540-6319 (JP); YAMAMOTO, Teruaki, 19F Matsushita IMP Blg. 3-7 Shiromi 1-chome, Chuo-ku Osaka-shi, Osaka 540-6319 (JP); BITO, Yasuhiko, 19F Matsushita IMP Blg. 3-7 Shiromi 1-chome, Chuo-ku Osaka-shi, Osaka 540-6319 (JP)
(74) Representative: TBK-Patent
(86) International application number: PCT/JP2006/306418
(87) International publication number: WO 2006/129415

(57) **Abstract**

A non-aqueous electrolyte secondary battery of the present invention includes a pelletized negative electrode. An active material for the negative electrode includes a first phase mainly composed of Si and a second phase containing a silicide of a transition metal. At least one of the first and second phases is amorphous or low-crystalline. The mean particle size (D50) is 0.50 to 20 µm, and the 10% diameter (D10) and 90% diameter (D90) in a volume cumulative particle size distribution are respectively 0.10 to 5.0 µm and 5.0 to 80 µm. The battery is improved in density and current collecting properties of the negative electrode, has a high capacity, and has an excellent cycle life.

## Description

### Technical Field

The present invention relates to a non-aqueous electrolyte secondary battery. More particularly, the present invention relates to a non-aqueous electrolyte secondary battery improved in a negative electrode, having high energy density, and being excellent in long-term cycle characteristics.

### Background Art

Since non-aqueous electrolyte batteries have high energy density, and can reduce the size and weight of devices, there is an increasing demand therefor as a main power source for various electronic devices and as a power source for memory backup. Nowadays, with remarkable advancement of portable electronic devices involving further downsizing, higher performance, and no necessitation of maintenance, higher energy density is strongly desired in the non-aqueous electrolyte batteries.
Many examinations have been carried out for positive electrode active materials and negative electrode active materials, since battery characteristics are highly dependent on characteristics of the positive electrode active materials and negative electrode active materials. A positive electrode mixture and a negative electrode mixture contain an active material which causes an electron transfer reaction, a conductive agent that contributes to electron conductivity inside the electrode, and a binder which makes these materials stick together.

Si as the negative electrode active material is capable of producing an intermetallic compound with Li and of reversively absorbing and desorbing Li. When Si is used for the active material of the non-aqueous electrolyte secondary battery, the theoretical capacity of Si for scharge and discharge is about 4200 mAh/g, i.e., quite large compared with the theoretical capacities of carbon materials, which is about 370 mAh/g and aluminium materials, which is about 970 mAh/g. Thus, many examinations have been carried out for an improvement in the use of Si for the active material of the non-aqueous electrolyte secondary battery, aiming for battery downsizing and a higher capacity.

However, Si is prone to crack and be micronized by changes in volume thereof involved with absorption and release of Li. Thus, the capacity is greatly reduced by going through charge/discharge cyclings, and it is difficult to use Si for the negative electrode material.
Thus, for the purpose of improving the cycle life, Patent Document 1 has proposed a negative electrode active material comprising at least two phases: a phase A mainly composed of Si and a phase B including a silicide of a transition metal and Si, wherein at least one of the phase A and phase B is in at least one of an amorphous state and low crystalline state.

Patent Documents 2 to 5 have proposed the use of Si powder with the reduced mean particle size. That is, a Si powder with a mean particle size of 1 to 100 nm (Patent Document 2), 0.1 to 2.5 µm (Patent Document 3), 1 nm to 200 nm (Patent Document 4), or 0.01 to 50 µm (Patent Document 5) has been proposed. The use of the active material made of Si in the form of a fine powder allows alloying of lithium and Si to proceed evenly upon charge, thereby suppressing localization of the reaction. It is therefore possible to reduce volume expansion due to alloying upon charge and volume contraction due to the release of lithium upon discharge, so that the electrode is unlikely to get distorted upon expansion and contraction thereof. As a result, it is considered that charge/discharge cycling can be repeated in a stable manner.
Patent Document 1: Japanese Laid-Open Patent Publication No. 2004-335272
Patent Document 2: Japanese Laid-Open Patent Publication No. 2003-109590
Patent Document 3: Japanese Laid-Open Patent Publication No. 2004-185810
Patent Document 4: Japanese Laid-Open Patent Publication No. 2004-214055
Patent Document 5: Japanese Laid-Open Patent Publication No. 2000-36323

### Disclosure of the Invention

### Problem To be Solved by the Invention

The negative electrode active material containing Si has extremely large expansion and contraction upon charge and discharge compared with a carbonaceous negative electrode active material used for a lithium-ion secondary battery. Therefore, the use of the negative electrode active material containing Si in the form of a fine powder is effective to improve the cycle life of the battery.
Generally, a pelletized electrode is produced by forming a mixture comprising an active material, a conductive agent and a binder or the like under pressure.

However, if the mean particle size of the active material decreases when producing the pelletized electrode, the density of the pellet becomes small when forming the pellet, and the energy density per unit volume becomes also low. Therefore, the battery has a drawback of the battery capacity being lowered. Also, the irreversible reaction amount of the battery increases, so that the battery has a drawback of the battery capacity being lowered. Further, the small particle size of the active material increases the reactivity of the active material with moisture or the like contained in an electrolyte, thereby promoting gas evolution. Accordingly, this produces a drawback of the cycle characteristics and storage characteristics being worsened.

However, if the mean particle size of the active material is increased in order to obtain the pellet with higher density and suppress the gas evolution, the distribution of the active material becomes uneven inside the pellet. Hence, insertion and extraction of lithium to and from the active material upon charge and discharge become uneven inside the pellet, which has a drawback of negatively affecting the cycle life of the battery.
In Patent Documents 2 to 5, no examination for problems peculiar to the above pelletized electrodes is conducted.

In view of the foregoing problems, it is an object of the present invention to provide a non-aqueous electrolyte secondary battery which has a negative electrode pellet having a high capacity and an excellent cycle life.

### Means for Solving the Problem

A non-aqueous electrolyte secondary battery of the present invention comprises:
a negative electrode composed of a molded pellet comprising a negative electrode active material, a conductive agent and a binder;
a positive electrode capable of absorbing and releasing lithium ions; and
a lithium ion conductive non-aqueous electrolyte,
wherein the negative electrode active material includes a first phase mainly composed of Si and a second phase comprising a silicide of a transition metal;
at least one of the first phase and the second phase is amorphous or low-crystaline;
the mean particle size (median diameter in a volume cumulative particle size distribution: D50) of the negative electrode active material is 0.50 to 20 µm; and
the 10% diameter (D10) and 90% diameter (D90) in a volume cumulative particle size distribution thereof are 0.10 to 5.0 µm and 5.0 to 80 µm respectively.

Since the negative electrode of the present invention, which has even distribution of the active material inside the negative electrode pellet, can uniform the expansion and contraction inside the pellet upon charge and discharge, the present invention can provide the non-aqueous electrolyte secondary battery having the excellent cycle life. Also, the negative electrode pellet having sufficient density can provide the non-aqueous electrolyte secondary battery having a high capacity.

### Effect of the Invention

The present invention can provide the non-aqueous electrolyte secondary battery having extremely high energy density, excellent charge/discharge cycle characteristics and high reliability.

### Brief Description of the Drawing

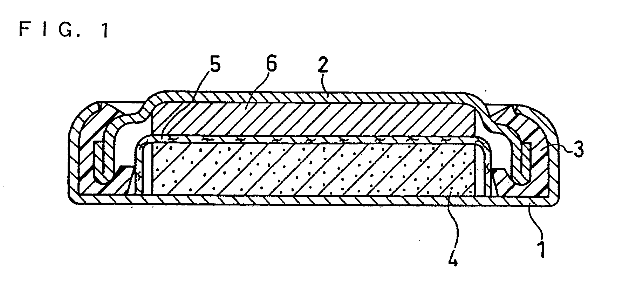

Fig. 1 is a longitudinal sectional view of a coin-shaped battery in an example of the present invention.

### Best Mode for Carrying Out the Invention

An active material contained in a negative electrode pellet of the present invention includes a first phase mainly composed of Si and a second phase comprising a silicide of a transition metal;
at least one of the first phase and second phase is amorphous or low-crystaline;
the mean particle size (D50) of the negative electrode active material is 0.50 to 20 µm; and
the 10% diameter (D10) and 90% diameter (D90) in a volume cumulative particle size distribution are respectively 0.10 to 5.0 µm and 5.0 to 80 µm.

Since the increased mean particle size of the active material causes the uneven distribution of the active material inside the pellet, expansion and contraction upon charge and discharge become uneven inside the pellet. This causes unfavorable current collection, and negatively affects the cycle life of the battery. On the other hand, the reduced mean particle size increases the porosity of the pellet, and therefore, since the density of the pellet is reduced, the battery capacity is reduced.
Furthermore, if the negative electrode active material comprises the first phase (A phase) mainly composed of Si and the second phase (B phase) comprising the silicide of the transition metal, and at least one of the first and second phases is amorphous or low-crystalline, there can be provided the non-aqueous electrolyte secondary battery having the high capacity and the excellent cycle life.

Also, in the present invention, the negative electrode active material comprising the first phase (A phase) mainly composed of Si and the second phase (B phase) comprising the silicide of the transition metal, at least one of the first and second phases being noncrystalline or low-crystalline, means an Si alloy.

The A phase is mainly composed of Si, and is particularly preferably a Si single phase. The A phase absorbs and releases Li, being capable of being electrochemically reacted with Li. When the A phase is the Si single phase, the A phase can absorb and release a large amount of Li per unit weight or unit volume. However, since Si has poor electron conductivity, the A phase may contain a small amount of an element such as phosphorus and boron, or a transition metal element.
Also, the B phase, which includes the silicide, can have a high affinity for the A phase, and can particularly suppress cracking at the crystal interface in volume expansion upon charge. Furthermore, since the B phase has more excellent electron conductivity and hardness than those of Si, the B phase improves the low electron conductivity of the A phase, and plays a role in maintaining the shape thereof to the stress upon expansion.

A plurality of phases may be present in the B phase. Two or more of phases having a different composition ratio of a transition metal element M to Si, for example, MSi₂ and MSi may be present. Two or more phases including a silicide of a different transition metal element may be present. The transition metal element is at least one selected from the group consisting of Ti, Zr, Ni, Cu and Fe. Preferred is Ti or Zr, and more preferred is Ti. These elements have higher electron conductivity than that of the silicide of other element in forming the silicide and higher strength. Furthermore, preferably, the B phase including the silicide of the transition metal includes TiSi₂ having high electron conductivity.
Furthermore, when the negative electrode pellet has a density of 1.6 to 2.4 g/cc in the case where the silicide of the transition metal in the B phase includes TiSi₂, preferably, the non-aqueous electrolyte battery has excellent cycle life and battery capacity.
Also, the density of the pellet is related to the porosity of the pellet, and preferably, the pellet has a porosity of 20 to 49%. The porosity exceeding 49% reduces the battery capacity, and the porosity of less than 20% reduces the capacity maintenance rate.

A preferred method for producing a negative electrode for a non-aqueous electrolyte secondary battery according to the present invention, comprises the steps of:
subjecting a mixture of a Si powder and a transition metal powder to a mechanical alloying method to produce a negative electrode active material including a first phase mainly composed of Si and a second phase comprising a silicide of a transition metal, at least one of the first phase and the second phase being amorphous or low-crystaline;
wet-grinding the negative electrode active material using balls as a medium so that the mean particle size (median diameter: D50) thereof is 0.50 to 20 µm, and the 10% diameter (D10) and 90% diameter (D90) in a volume cumulative particle size distribution are respectively 0.10 to 5.0 µm and 5.0 to 80 µm; and
molding the negative electrode material comprising the ground negative electrode active material, a conductive agent and a binder under pressure to provide a negative electrode pellet.

The method for preparing the negative electrode active material including the first phase (A phase) mainly composed of Si and the second phase (B phase) comprising the silicide of the transition metal, at least one of the A phase and B phase being amorphous or low-crystaline is preferably a mechanical alloying method. However, the other methods may be used as long as they can realize the negative electrode active material in the above state. The other examples include casting, gas atomization, liquid quenching, ion beam sputtering, vacuum deposition, plating and gas phase chemical reaction.
When a raw material containing Si and another raw material containing at least one selected from the transition elements are mixed together and this mixture is subjected to the mechanical alloying method, the state of the phase can be preferably controlled easily. Also, before a step of performing a mechanical alloying operation, steps of melting raw materials and quenching the melt for solidification may be performed.

As long as the ratio of elements required as the negative electrode active material can be realized as the raw material for the above negative electrode active material, the aspect thereof or the like is not particularly limited. For example, there can be used ones prepared by mixing element simple substances at the target ratio, which constitute the negative electrode active material, and alloys, solid solutions and intermetallic compounds having the target element ratio.

The producing method of the negative electrode active material by the above mechanical alloying operation is a method for synthesizing the negative electrode active material in a dry atmosphere. However, the synthesized negative electrode active material has a drawback that it has a very wide particle size distribution. It is thus preferable to subject the synthesized negative electrode active material to classification in order to uniform the particle size.
Examples of the classification method include, for example, sieving for classifying particles depending on the size of a sieve through which larger particles cannot pass and sedimentation for classifying particles utilizing the difference in sedimentation rate of solid particles having different sizes in a fluid medium. These classification processes, however, are unable to make use of particles whose sizes are out of a predetermined range as the active material, thereby being disadvantageous in terms of material cost. Therefore, it is preferable to perform a treatment for adjusting the particles to required particle size.

Grinding techniques have long been used in various industries. It is important to select an efficient grinding method depending on the object to be ground. By controlling the grinding, it is also possible to simultaneously: (1) crush agglomerated particles and adjust their particle size; (2) mix and disperse several kinds of powders; and (3) modify and activate particle surface.
The grinding methods are roughly classified into dry grinding and wet grinding. The dry grinding method has a large coefficient of friction of particles and balls, thereby producing a grinding effect which is several times more powerful than wet grinding method. However, a disadvantage of the dry grinding method is that the ground particles are intensively adhered to balls (media) and the walls of the container. Also, since the dry grinding method causes agglomeration of the particles themselves, the method has a drawback of a wide particle size distribution broadening.

According to the wet grinding, a dispersion medium such as water is added to the ground particles to form a slurry in grinding the particles. Therefore, the adhesion of the particles to the balls and the container walls or the like is unlikely to occur. Also, since the particles are dispersed in the dispersion medium, it is easier to uniform the particle size than the dry grinding.
The wet grinding has the following merits. A ball mill type grinder which can grind the material in wet has a simple structure. The balls as the grinding medium made of various materials can be readily obtained. Since the material is ground by contacting points of the balls, it is evenly ground at a great number of locations thereof.

Therefore, in order to produce the negative electrode active material, it is preferable to produce the active material particles by the dry mechanical alloying method, and then adjust the mean particle size (D50) of the negative electrode active material to 0.5 to 20 µm, and respectively adjust the 10% diameter (D10) and 90% diameter (D90) in a volume cumulative particle size distribution to 0.10 to 5.0 µm and 5.0 to 80 µm in the wet grinding, for example, a ball mill.
Since the use of the wet grinding facilitates the formation of a thin oxide film which functions as a film for preventing oxidation of the negative electrode active material on the particle surface, the wet grinding method is preferably adopted for grinding the negative electrode active material of the present invention. Also, the use of the wet grinding allows the surface oxide film to be formed on the material surface in a gentle manner. Since this surface oxide film functions as an antioxidant, it is unnecessary to strictly control the oxygen concentration of the atmosphere upon grinding.

As the dispersion medium used for wet grinding, there can be used aprotic solvents such as hexane, acetone and n-butyl acetate, and protic solvent such as water, methyl alcohol, ethyl alcohol, 1-propyl alcohol, 2-propyl alcohol, 1-butyl alcohol and 2-butyl alcohol.
However, in a closed wet grinder, the use of the protic solvent unpreferably promotes gas evolution during grinding to cause the expansion of the container and liquid leakage. This is because the Si powder is reacted with the protic solvent to promote hydrogen gas evolution. Therefore, as the dispersion medium used for wet-grinding, the aprotic solvent is preferably used. When using the protic solvent, it is preferable to grind in an open grinder.

When the carbon material is added to the negative electrode active material to be wet-ground, the surface of each of the particles of the negative electrode active material to be finely ground can be covered with the carbon material. Thereby, the oxidation of the active material particles including Si can be suppressed. Furthermore, the following effect is obtained. That is, the contact resistance among particles can be reduced to reduce the resistance of the electrode compared with that of the case where the active material and the carbon material are simply mixed in preparing the negative electrode mixture.
When graphite is used as the carbon material, the adhesion of the material to a grinding container is effectively prevented since graphite is hard and poor in malleability and ductility. Although the carbon material as the additive is preferably mixed with raw materials before grinding, the carbon material may be added during grinding.

General grinders may be used. There can be used apparatuses capable of wet grinding such as attritors, vibration mills, ball mills, planetary ball mills and bead mills.
In order to produce the negative electrode, for example, an electronic conductive auxiliary agent such as carbon black and graphite, the binder and the dispersion medium are added to the negative electrode active material, and mixed to produce a mixture. The mixture is then formed into a pellet under pressure. The amount of the carbon material to be added is not particularly limited. However, the amount thereof is 1 to 50% by weight of the negative electrode active material, and particularly preferably 1 to 40% by weight.

The non-aqueous electrolyte used for the non-aqueous electrolyte secondary battery of the present invention comprises a non-aqueous solvent and a lithium salt dissolved in the non-aqueous solvent. Examples of the non-aqueous solvents include: cyclic carbonates such as ethylene carbonate, propylene carbonate, butylene carbonate and vinylene carbonate; chain carbonates such as dimethyl carbonate, diethyl carbonate, ethyl methyl carbonate and dipropyl carbonate; aliphatic carboxylic acid esters such as methyl formate, methyl acetate, methyl propionate and ethyl propionate; γ-lactones such as γ-butyrolactone; chain ethers such as 1,2-dimethoxyethane, 1,2-diethoxyethane and ethoxymethoxyethane; cyclic ethers such as tetrahydrofuran and 2-methyltetrahydrofuran; aprotic organic solvents such as dimethyl sulfoxide, 1,3-dioxolane, formamide, acetamide, dimethylformamide, dioxolane, acetonitrile, propionitrile, nitromethane, ethyl monoglyme, phosphoric acid triester, trimethoxymethane, dioxolane derivatives, sulfolane, methylsulfolane, 1,3-dimethyl-2-imidazolidinone, 3-methyl-2-oxazolidinone, propylene carbonate derivatives, tetrahydrofuran derivatives, ethyl ether, 1,3-propanesultone, anisole, dimethyl sulfoxide, N-methyl pyrrolidone, butyl diglyme and methyl tetraglyme. They are used alone or in combination of two or more of them.

Examples of lithium salts soluble in these solvents include LiClO_{4,} LiBF_{4,} LiPF_{6,} LiAlCl_{4,} LiSbF_{6,} LiSCN, LiCF₃SO_{3,} LiCF₃CO_{2,} Li(CF₃SO₂)_{2,} LiAsF_{6,} lithium chloroboranes such as LiB₁₀Cl_{10,} lithium lower aliphatic carboxylates, LiCl, LiBr, LiI, lithium tetrachloroborate, lithium tetraphenylborate and imides. They may be used singly or in combination of two or more of them. Solid electrolytes such as gel may be used. The amount of the lithium salt to be dissolved in the non-aqueous solvent is not particularly limited, but it is preferably 0.2 to 2.0 mol/L, and particularly preferably 0.5 to 1.5 mol/L.

The negative electrode contains a binder which holds a graphite material, the negative electrode active material and the conductive agent or the like in a fixed shape. The binder may be of any material as long as the binder is electrochemically inactive with respect to Li in the potential range of the negative electrode and has no effect on other substances. Suitable examples include styrene-butylene copolymer rubber, polyacrylic acid, polyethylene, polyurethane, polymethyl methacrylate, polyvinylidene fluoride, polytetrafluoroethylene, carboxymethyl cellulose, methyl cellulose, and polyimide. Of these, the volume of the negative electrode active material containing Si changes greatly. Hence, styrene-butylene copolymer rubber, which is capable of accommodating volume changes in a relatively flexible manner, and polyacrylic acid and polyimide, which are apt to maintain strong adhesion even upon volume change, are preferred, for example.
The more the amount of the binder to be added is, the structure of the negative electrode can be maintained. However, since a material which is not reacted with Li increases in the negative electrode, the battery capacity is reduced. In view of the structure maintenance and the battery capacity, the optimum amount is determined. A plurality of binders may be used in combination.

A separator used for the present invention is made of a microporous thin film having a large ion-permeability, a predetermined mechanical strength, and an insulating property. There is used a sheet, non-woven fabric, or woven fabric made of a polymer containing polypropylene, polyethylene, polyphenylene sulphide, polyethylene terephthalate and polyamide, polyimide or the like alone or in combination;or a glass fiber or the like, in view of resistance to organic solvents and a hydrophobic property. The thickness of the separator is generally 10 to 300 µm. Although the porosity of the separator is decided according to electron and ion permeability, separator material, and membrane thickness, generally, the porosity is preferably 30 to 80%. Also, for the separator, inexpensive polypropylene is usually used. In the case of being attached to a circuit board with electronic components and used for reflow soldering application, polypropylene sulfide, polyethylene terephthalate, polyamide and polyimide, which have a heat deformation temperature of 230°C or higher are preferably used.

For the positive electrode material used for the non-aqueous electrolyte secondary battery of the present invention, there can be used a lithium-containing or lithium-free compound. Examples thereof include Li_{X}CoO₂, Li_{X}NiO₂, Li_{X}MnO₂, Li_{X}Mn_{1+y}O₄, LiₓCo_{y}Ni_{1-y}O₂, LiₓCo_{y}4_{1-y}O_{z}, LiₓNi_{1-y}M_{y}O_{z}, LiₓMn₂O₄, and LiₓMn_{2-y}M_{y}O₄. Herein, M is at least one selected from the group consisting of Na, Mg, Sc, Y, Mn, Fe, Co, Ni, Cu, Zn, Al, Cr, Pb, Sb and B; x is 0 to 1.2; y is 0 to 0.9; and z is 2.0 to 2.3. The above x value is a value before starting charge or discharge, and increases or decreases when the battery is charged or discharged.
In addition to the above compounds, there can be also used the other positive electrode materials such as transition metal chalcogenides; vanadium oxides and their lithium compounds; niobium oxides and their lithium compounds; conjugated polymers including an organic conductive substance; and chevrel phase compounds. Also, a plurality of different positive electrode materials can be mixed for use.

The present invention is applicable to non-aqueous electrolyte secondary batteries having shapes such as flat and coin shapes, and however, the present invention is not particularly limited thereto.
Hereinafter, preferred examples of the present invention will be described. However, the present invention is not limited to these examples.

### Examples

In the following examples, a negative electrode active material was produced by a mechanical alloying method as a dry method such as a vibration ball mill. The negative electrode active material was wet-ground by using a ball mill.
The particle size of the ground negative electrode active material particles was measured by a particle size distribution analyzer utilizing laser scattering. The particle size expresses the typical size of irregular-shape particles. Examples of the expressing methods thereof include circle equivalent diameter and Feret diameter. The particle size distribution can be measured by using microtracking or particle image analysis.
The microtracking irradiates a powder dispersed in a dispersion medium such as water with laser beams to examine their diffraction. Thereby, the mean particle size (D50: the center particle size of the particle size distribution), and the 10% diameter (D10) and 90% diameter (D90) of the volume cumulative particle size distribution which represent the distribution of the secondary particle size can be measured. Besides the laser scattering, the particle size distribution can also be determined by processing the observed image obtained by scanning electron microscope (SEM).

First, the methods of producing a negative electrode active material and a negative electrode, and the methods for production and evaluation of a coin-shaped battery used to evaluate its cycle life will be described.

### (Producing Method of Negative Electrode Active Material)

The negative electrode active material was produced by the following method.
First, metals Ti, Zr, Ni, Cu and Fe (each metal having a purity of 99.9%, manufactured by Kojundo Chemical Lab. Co., Ltd., and a particle size of below 20 µm) were used in a powder form as raw material for transition metal. A Si powder manufactured by Kanto Chemical Co., Inc., with a 99.999% purity and having particle size of below 20 µm was used as the raw material. When the weight percentage of the Si phase as A phase in the negative electrode active material to be synthesized was set to 30%, the raw materials were respectively weighed and mixed at the following weight ratio. Items (6), (7) are comparative examples.

(1) Ti:Si = 32.2:67.8
(2) Zr:Si = 43.3:56.7
(3) Ni:Si = 35.8:64.2
(4) Cu:Si = 37.2:62.8
(5) Fe:Si = 34.9:65.1
(6) Co:Si = 35.8:64.2
(7) Mn:Si = 34.6:65.4

Each of these powder mixtures was placed in a vibration mill. Then, 2-cm-diameter stainless steel balls were placed therein such that they occupied 70% of the internal volume of the vibration mill. The container was evacuated, the inside of the container was exchanged with Ar (purity 99.999%, manufactured by Nippon Sanso Corporation) so as to provide a pressure of 1 atmosphere. Under such conditions, a mechanical alloying operation was performed. The operation conditions were set to standard conditions of 60 Hz and 60 hours. When the negative electrode active materials produced by this operation were respectively collected, and the particle size distributions thereof were examined. It was found that the negative electrode active materials had a particle size distribution of 0.5 to 200 µm.
It was found that a Ti-Si alloy, and a Si single phase and TiSi₂ phase which are presumed from the results of the X-ray diffraction analysis were present in the negative electrode active material obtained from the powder mixture (1). This alloy material was observed with a transmission electron microscope (TEM). As a result, it was found that the amorphous Si phase or the Si phase with a crystal of approximately 10 nm, and the TiSi₂ phase with a crystal of approximately 15 to 20 nm were respectively present.

Similarly, transmission electron microscope (TEM) observed that a Zr-Si alloy, a Ni-Si alloy, a Cu-Si alloy and a Fe-Si alloy were respectively present in the negative electrode active materials obtained from the powder mixtures (2), (3), (4) and (5). The results of the X-ray diffraction indicated that a ZrSi₂ phase, a NiSi₂ phase, a CuSi₂ phase and a FeSi₂ phase were presumed to be present in addition to the Si single phase.

The particle size of the negative electrode active material particles having a wide particle size obtained as described above was uniformed, and the batteries were produced. Various evaluations were performed.
The particle size of the particles were measured, using a particle size distribution analyzer HRA (MODEL No. 9320-X100) manufactured by Microtrack Incorporated. As a pretreatment before measuring, the particles were dispersed in water by ultrasonically dispersing for 180 seconds.

As comparative examples, the cases where the transition metals were Co and Mn were also examined. Metals Co and Mn (each metal having a purity of 99.99%, manufactured by Kojundo Chemical Lab. Co., Ltd., and particle size of below 20 µm) were respectively used for raw materials, and the mixed weight ratio of raw materials was set to the following items to prepare powder mixtures. The negative electrode active material was produced in the same manner as in the above method except for this weight ratio.
(6) Co:Si = 35.8:64.2
(7) Mn:Si = 34.6:65.4

### (Method of Producing Negative Electrode)

Next, the obtained negative electrode active material, graphite (SP-5030, manufactured by Nippon Graphite Industries, Ltd.) as the conductive agent and a polyacrylic acid (average molecular weight: 150,000, manufactured by Wako Pure Chemical Industries, Ltd.) as the binder were mixed in a weight ratio of 100:20:10. This mixture was molded in the disk shape of 4 mm in diameter at molding pressure of 30 MPa, and was then dried at 150°C for 12 hours to obtain a negative electrode pellet.

### (Method of Producing Positive Electrode)

Manganese dioxide was mixed with lithium hydroxide in a molar ratio of 2:1, and the mixture was then baked in air at 400°C for 12 hours, to obtain lithium manganate. This lithium manganate was mixed with the conductive agent of carbon black and an aqueous dispersion of the binder of fluorocarbon resin in a weight ratio of a solid content of 88:6:6. This mixture was molded in the disk shape of 4 mm in diameter at molding pressure of 30 MPa, and was then dried at 250°C for 12 hours. The porosity of the positive electrode pellet thus obtained was 30%.

### (Method of Producing Battery)

In this example, coin-shaped batteries as illustrated in Fig. 1 were produced. These batteries were 6.8 mm in diameter and 2.1 mm in thickness.
A positive electrode case 1, which also functions as a positive electrode terminal, is made of stainless steel having excellent corrosion resistance. A negative electrode case 2, which also functions as a negative electrode terminal, is made of stainless steel which is the same material as that of the positive electrode case 1. A gasket 3, which insulates the positive electrode case 1 from the negative electrode case 2 and seals them, is made of polypropylene. Pitch is applied to the surface of the gasket 3 in contact with the positive electrode case 1 and the negative electrode case 2.

An electrolyte was prepared by dissolving LiN(CF₃SO₂)₂ at a concentration of 1 mol/L in a solvent mixture composed of propylene carbonate, ethylene carbonate and 1,2-dimethoxyethane in a volume ratio of 1:1:1. The electrolyte was injected into the positive electrode case 1 accommodating the above positive electrode pellet 4, and the negative electrode case 2 accommodating the above negative electrode pellet 6 and equipped with the gasket 3 at the peripheral part. The separator 5 made of polyethylene non-woven fabric was then disposed between the positive electrode pellet and the negative electrode pellet. They were combined, and the opening end of the positive electrode case was caulked to the peripheral part of the gasket to produce a sealed battery. A thin metallic lithium film was attached to the surface of the negative electrode pellet. This lithium film was electrochemically absorbed into the negative electrode upon coming into contact with the electrolyte to form an alloy with Si.

### (Procedure for Evaluation of Battery)

Coin-shaped batteries were set in a constant temperature room at 20°C, and charge/discharge cycling test was performed on the following conditions.
The charge/discharge current was 0.02C (1C is 1 hour-rate current), and the battery voltage was in the range of 2.0 to 3.3 V. This charge/discharge cycle was repeated 50 times. The discharge capacity at the second cycle in being charged and discharged on the above conditions was designated as the initial battery capacity. The ratio of the discharge capacity after 50th cycle to the discharge capacity at the second cycle was expressed as a percentage (%), which was defined as the capacity maintenance rate. The closer the capacity maintenance rate is to 100(%), the better the cycle life is.

### Example 1

In this example, the negative electrode active material obtained from the above powder mixture (1) was used, and the mean particle size was examined. The weight ratio of an Si phase which is the A phase in the negative electrode active material was made 30% by weight. The negative electrode active material was produced by the mechanical alloying method, and measurements of its particle size distribution revealed a wide size range of 0.5 to 200 µm and a mean particle size (D50) of 50 µm. The negative electrode active material was adjusted so as to have the particle size distribution shown in Table 1 by classifying the negative electrode active material with a sieve. The negative electrode pellet was then molded using the negative electrode active material having each particle size distribution, and the battery evaluation was performed using this negative electrode pellet. The negative electrode active materials of the batteries 1 to 8 were not classified with the sieve. Table 1 shows the evaluation results.

**[Table 1]**

| Battery No. | D10 (µm) | D50 (µm) | D90 (µm) | Pellet Porosity (%) | Pellet Density (g/cc) | Inititial Capacity (mAh) | Capacity Maintenance Rate (%) |
|---|---|---|---|---|---|---|---|
| 1-1 | 0.2 | 1.0 | 5.0 | 50 | 1.4 | 2.7 | 93 |
| 1-2 | 0.4 | 2.0 | 8.0 | 49 | 1.4 | 2.8 | 93 |
| 1-3 | 0.5 | 3.0 | 10 | 30 | 1.6 | 4.4 | 93 |
| 1-4 | 1.0 | 5.0 | 20 | 25 | 2.3 | 5.0 | 93 |
| 1-5 | 2.0 | 10 | 50 | 20 | 2.3 | 5.0 | 92 |
| 1-6 | 5.0 | 20 | 80 | 16 | 2.4 | 4.9 | 90 |
| 1-7 | 7.0 | 30 | 100 | 16 | 2.4 | 4.8 | 51 |
| 1-8 | 6.0 | 50 | 130 | 16 | 2.4 | 4.8 | 51 |

Table 1 indicates that when the mean particle size (D50) of the negative electrode active material is 0.50 to 20 µm, and the 10% diameter (D10) and 90% diameter (D90) in the volume cumulative particle size distribution are respectively 0.10 to 5.0 µm and 5.0 to 80 µm, the negative electrode active material has a high capacity and high capacity maintenance rate after 50 cycles.
This reason is believed as follows. As the mean particle size increases, the battery capacity increases. However, since the distribution of the active material inside the pellet is more uneven, expansion and contraction of the pellet upon charge and discharge is also more uneven. As a result, the current collection is not performed well, and the uneven expansion and contraction negatively affect the cycle life. On the other hand, if the mean particle size decreases, the capacity maintenance rate after 50 cycles becomes higher. However, since the density of the negative electrode pellet is reduced, the battery capacity is reduced. Therefore, it is suitable that the mean particle size (D50) of the negative electrode active material is 0.50 to 20 µm, and the 10% diameter (D10) and 90% diameter (D90) in the volume cumulative particle size distribution are respectively 0.10 to 5.0 µm and 5.0 to 80 µm as the negative electrode active material of the present invention.

### Example 2

In this example, the negative electrode active materials obtained from above powder mixtures (2) - (5) were used. The weight ratio of the Si phase which is the A phase in the negative electrode active material was made 30% by weight. In example 2, as the kind of the transition metal contained in the second phase (B phase) in the negative electrode active material, the cases of Ti, Zr, Ni, Cu and Fe were examined as shown in Table 2. As comparative examples, the transition metals of Co and Mn were also examined.
The producing method of the negative electrode active material is described above. The weight ratio of the Si phase which is the A phase in the negative electrode active material was made 30% by weight. The mean particle sizes (D50) respectively obtained after sieving were 1.0 µm as shown in Table 2.

Except that different transition metals were used, each negative electrode active material was the same as the above material. However, all of the negative electrode pellets were adjusted so that the porosity was set to 22%. Table 2 shows the evaluation results.

**[Table 2]**

| Battery No. | Transition Metal in B Phase | D10 (µm) | D50 (µm) | D90 (µm) | Initial Capacity (mAh) | Capacity Maintenance Rate (%) |
|---|---|---|---|---|---|---|
| 2-1 | Ti | 1.0 | 5.0 | 20 | 5.0 | 93.5 |
| 2-2 | Zr | 3.0 | 5.0 | 40 | 4.6 | 90.1 |
| 2-3 | Ni | 1.0 | 5.0 | 20 | 4.5 | 87.9 |
| 2-4 | Cu | 5.0 | 5.0 | 50 | 4.5 | 79.2 |
| 2-5 | Fe | 2.0 | 5.0 | 30 | 4.3 | 81.2 |
| 2-6 | Co | 3.0 | 5.0 | 40 | 4.1 | 63.3 |
| 2-7 | Mn | 2.0 | 5.0 | 40 | 4.0 | 61.5 |

Each of these batteries had high initial battery capacity and exhibited excellent capacity maintenance rates at the 50th cycle.
Although the mechanism is not yet known in detail, the main cause of the cycle deterioration which is the problem of the negative electrode including a material such as silicon is the degradation of the current collection due to charge and discharge. That is, the expansion and contraction of the negative electrode active material upon lithium absorption and desorption breaks the electrode structure, thereby increasing the resistance of the whole negative electrode.

In particular, in the cycle characteristics, the state of a more suitable phase is present, and the cycle characteristics are further enhanced by the suitable selection of the transition metal. This is believed to be related to the strength of the material to expansion upon charge being in a more suitable state. Specifically, it is believed that the phase suppresses the cracking upon charge when the phase contains a transition metal, among others, Ti, Zr, Ni, Cu or Fe, and is in a suitable state. Particularly, the transition metal was preferably Ti or Zr, and more preferably Ti. It is believed that even when the phase containing the transition metal contains Co or Mn, the phase may be used by making improvements in the conductivity of materials or improving the kind or amount or the like of the conductive agent used for the electrode.

### Example 3

This example examined a method for wet-grinding the negative electrode active material produced by the mechanical alloying method using balls as the medium when the transition metal contained in the B phase was Ti.
Zirconia balls having a diameter of 5 mm were used as the balls (media). A 500-ml polyethylene container was used as the container. n-butyl acetate of 120 ml was used as the dispersion medium. The revolution frequency of the ball mill was made 120 rpm. Thereafter, the negative electrode active material was collected by removing the dispersion medium. A predetermined particle size adjustment was performed by adjusting the grinding time.
The synthesis method of the negative electrode active material, and the methods for production and evaluation of the battery are the same as those of the above examples.
Table 3 shows material yields when the particle size is adjusted by the wet grinding of this example. Also, for comparison, the material yields when sieving in example 1 are also shown.

**[Table 3]**

| Battery No. | D10 (µm) | D50 (µm) | D90 (µm) | Yield (%) |
|---|---|---|---|---|
| 1-1 | 0.2 | 1.0 | 5.0 | 8.1 |
| 1-2 | 0.4 | 2.0 | 8.0 | 10.3 |
| 1-3 | 0.5 | 3.0 | 10 | 15.7 |
| 1-4 | 1.0 | 5.0 | 20 | 23.0 |
| 1-5 | 2.0 | 10 | 50 | 35.0 |
| 1-6 | 5.0 | 20 | 80 | 61.2 |
| 1-7 | 7.0 | 30 | 100 | 60.3 |
| 3-1 | 0.3 | 1.0 | 3.0 | 90.1 |
| 3-2 | 0.4 | 2.0 | 5.0 | 90.2 |
| 3-3 | 0.7 | 3.0 | 7.0 | 90.3 |
| 3-4 | 2.0 | 5.0 | 18 | 92.2 |
| 3-5 | 3.0 | 10 | 45 | 92.5 |
| 3-6 | 7.0 | 20 | 70 | 93.2 |
| 3-7 | 8.0 | 30 | 88 | 94.1 |

It was found that wet grinding resulted in large improvements in the material yields in comparison with sieving. Therefore, the wet grinding using the balls as the medium is preferable as the method for adjusting the particle size of the negative electrode active material of the present invention.
As used herein, the "material yield" refers to the percent (%) of the weight of the active material collected after the classification (sieving or wet grinding) relative to the weight of the active material supplied for the classification (sieving or wet grinding). The closer the yield is to 100%, the better the material yield is.
Furthermore, according to the wet grinding, the difference between D50 and D10 and the difference between D90 and D50 are reduced and the particle size distribution broadening is narrowed, in comparison with sieving. Therefore, the wet grinding is considered to be suited for more narrowly adjusting the width of the particle size distribution of the negative electrode active material.

### Example 4

This example examined the dispersion medium in the wet grinding processing of the negative electrode active material. In order to examine the reactivity between the negative electrode material and the dispersion medium using n-butyl acetate, acetone, water or ethyl alcohol as the dispersion medium, the grinding time was made 24 hours in the same manner as in example 3 to wet-grind. Table 4 shows the results obtained by observing polyethylene containers after the wet grinding.

**[Table 4]**

| Dispersion Medium | | Expansion of Container | Liquid Leakage |
|---|---|---|---|
| Aprotic | N-butyl Acetate | No | No |
| | Acetone | No | No |
| Protonic | Water | Yes | Yes |
| | Ethyl Alcohol | Yes | Yes |

In n-butyl acetate and acetone which are the aprotic solvent as the dispersion medium, no deformation of the containers was observed and no liquid leakage was observed. On the other hand, the expansion of the container in water and ethyl alcohol, which are the protic solvent, upon grinding and the liquid leakage of a part of the solvent to the outside of the container were observed. This is probably because the negative electrode active material reacts with the protic solvent upon grinding to promote gas evolution. This shows that the aprotic solvent is preferable as dispersion medium for wet grinding when a closed grinder is used. Also, since the use of the protic solvent for the wet grinding promotes gas evolution in the grinding processing, it is preferable to grind in an open grinder.

### Example 5

In this example, the carbonaceous material is added to the negative electrode active material upon the wet grinding, and thereby the diffusion of graphite on the surface of the negative electrode active material by mechanical stress was examined.
The negative electrode active material produced by the mechanical alloying method was wet-ground in the same manner as in example 3. Upon the wet grinding, the graphite was coated on the surface of the negative electrode active material by adding graphite (SP-5030, manufactured by Nippon Graphite Industries, Ltd.) at a weight ratio of 20% to the negative electrode active material.
By mixing polyacrylic acid to the active material with the coated graphite, there was produced a mixture in which the weight ratio of the negative electrode active material, graphite and polyacrylic acid was made 100:20:10. A negative electrode was produced by processing the mixture in the same manner as in the above producing method of the negative electrode, and the battery evaluation was performed.
Table 5 shows the evaluation results of this example. Also, Table 5 also shows the evaluation result of the battery in which graphite is simply mixed in producing the negative electrode for comparison.

**[Table 5]**

| Battery | Additive in Wet Grinding | D10 (µm) | D50 (µm) | D90 (µm) | Pellet Porosity (%) | Pellet Density (g/cc) | Initial Capacity (mAh) | Capacity Maintenance Rate (%) |
|---|---|---|---|---|---|---|---|---|
| 5-1 | Graphite | 0.40 | 1.0 | 9.0 | 21 | 2.2 | 5.0 | 99 |
| 3-3 | None | 0.50 | 1.0 | 8.0 | 21 | 2.2 | 5.0 | 94 |

Table 5 shows that the battery using the negative electrode active material having the surface on which the carbon material is coated has more excellent cycle life than that of the battery in which the graphite is simply mixed with the negative electrode active material.
This is probably because the current collecting properties of the negative electrode pellet can be maintained by coating the carbon material on the negative electrode active material even if the negative electrode pellet expands and contracts upon charge and discharge.

### Industrial Applicability

The present invention can enhance the cycle life and capacity of the non-aqueous electrolyte secondary battery provided with the negative electrode containing Si. Therefore, the non-aqueous electrolyte secondary battery of the present invention is particularly useful as the main power source and memory back-up power source of various electronic devices such as cellular phones and digital cameras.

## Claims

1. A non-aqueous electrolyte secondary battery comprising:
a negative electrode composed of a molded pellet comprising a negative electrode active material, a conductive agent and a binder;
a positive electrode capable of absorbing and releasing lithium ions; and
a lithium ion conductive non-aqueous electrolyte,
wherein the negative electrode active material includes a first phase mainly composed of Si and a second phase comprising a silicide of a transition metal;
at least one of the first phase and the second phase is amorphous or low-crystaline;
the mean particle size (D50) of the negative electrode active material is 0.50 to 20 µm; and
the 10% diameter (D10) and 90% diameter (D90) in a volume cumulative particle size distribution thereof are 0.10 to 5.0 µm and 5.0 to 80 µm, respectively.

2. The non-aqueous electrolyte secondary battery according to claim 1, wherein the transition metal is at least one selected from the group consisting of Ti, Zr, Ni, Cu and Fe.

3. The non-aqueous electrolyte secondary battery according to claim 2, wherein the silicide of the transition metal is TiSi₂.

4. The non-aqueous electrolyte secondary battery according to claim 3, wherein the negative electrode pellet has a density of 1.6 to 2.4g/cc.

5. A method for producing a negative electrode for a non-aqueous electrolyte secondary battery, the method comprising the steps of:
subjecting a mixture of a Si powder and a transition metal powder to mechanical alloying to produce a negative electrode active material containing a first phase mainly composed of Si and a second phase comprising a silicide of a transition metal, at least one of the first phase and second phase being amorphous or low-crystaline;
wet-grinding the negative electrode active material using balls as a medium so that the mean particle size (D50) thereof is 0.50 to 20 µm, and the 10% diameter (D10) and 90% diameter (D90) in a volume cumulative particle size distribution thereof are 0.10 to 5.0 µm and 5.0 to 80 µm, respectively; and
molding the negative electrode material comprising the ground negative electrode active material, a conductive agent and a binder under pressure to provide a negative electrode pellet.

6. The method for producing a negative electrode for a non-aqueous electrolyte secondary battery according to claim 5, wherein a dispersion medium used for the step of wet-grinding is an aprotic solvent.

7. The method for producing a negative electrode for a non-aqueous electrolyte secondary battery according to claim 5, wherein a dispersion medium used for the step of wet-grinding is a protic solvent, and an open grinder is used.

8. The method for producing a negative electrode for a non-aqueous electrolyte secondary battery according to any of claims 5 to 7, wherein the conductive agent is a carbonaceous material and the whole or part thereof, is ground with the negative electrode active material in the step of wet-grinding.
